# EUROPÄISCHE PATENTSCHRIFT

(11) **EP 0 587 871 B1**
(45) Veröffentlichungstag und Bekanntmachung des Hinweises auf die Patenterteilung: **18.09.1996**
(21) Anmeldenummer: 93908894.4
(22) Anmeldetag: 02.04.1993
(51) Int. Cl.: C08L 53/00, C08L 23/08, C08L 23/16

(54) **FOLIE ODER FORMKÖRPER AUS EINEM THERMOPLASTISCHEN KUNSTSTOFF AUF DER BASIS EINES POLYPROPYLEN-BLOCK-COPOLYMERISATS**
FOIL OR MOULDED BODY MADE OF A THERMOPLASTIC MATERIAL BASED ON A POLYPROPYLENE BLOCK COPOLYMER
FEUILLE OU CORPS DE MOULAGE EN MATIERE THERMOPLASTIQUE A BASE D'UN COPOLYMERISAT EN BLOC DE POLYPROPYLENE

(30) Priorität: 04.04.1992 DE 4211413
(43) Veröffentlichungstag der Anmeldung: 23.03.1994
(73) Patentinhaber: Benecke-Kaliko Aktiengesellschaft, D-30419 Hannover (DE)
(72) Erfinder: KOPYTKO, Walter, D-8624 Waldkraiburg (DE)
(74) Vertreter: Hagemann, Heinrich, Dr.rer.nat., Dipl.-Chem.
(86) Internationale Anmeldenummer: EP9300821
(87) Internationale Veröffentlichungsnummer: WO9320146

(56) Entgegenhaltungen:
- EP-A- 0 457 082
- US-A- 3 328 486
- US-A- 3 689 595
- US-A- 4 194 155

## Beschreibung

Die Erfindung betrifft eine Folie oder einen Formkörper aus einem thermoplastischen Kunststoff auf der Basis mindestens eines teilkristallinen Polyalken-Elastomeren und/oder -Elastomergemisches bestehend aus einem mehrphasigen Alken-Block-Copolymerisat mit einem bestimmten heterophasigen Elastomer-Copolymerisat-Anteil und eines Homo- und/oder Copolymers eines Alkens und eines polymeren Modifizierungsmittels, wobei der Kunststoff gegebenenfalls Stabilisatoren, Füllstoffe, Gleitmittel, Farbmittel sowie andere übliche Zusatzstoffe enthält.

Kunststoffolien der oben beschriebenen Art sowie damit hergestellte Form- und Verbundteile gehen aus der DE-A-40 15 748 hervor. Der Kunststoffanteil einer derartigen Folie enthält a) 55 bis 95 Gew.-Teile mindestens eines thermoplastischen Polyolefin-Elastomers oder -Elastomergemisches, bestehend aus einem heterophasigen Polypropylen-Block-Copolymer mit einem Ethylen-Propylen-Copolymeranteil von 15 bis 50 Gew.-% (bezogen auf 100 Gew.-Teile des Ethylen-Propylen-Block-Copolymers) und b) 45 bis 5 Gew.-Teile an anderen Polymeren, insbesondere in Form von Olefinen sowie styrolhaltigen Polymeren. Die Gesamtmenge an Ethylen und Propylen muß in dem Block-Copolymer 10 bis 50 Gew.-% betragen. Der vollständige Ersatz des Block-Copolymers durch ein statistisches Copolymer wird ausgeschlossen. Das Block-Copolymer soll aber bis zu 80 Gew.-%, vorzugsweise bis zu 35 Gew.-%, durch ein Ethylen-Propylen-Random- oder ein Block-Copolymer eines Ethylengehaltes von 2 bis 10 Gew.-% ersetzt werden können. Mit der bekannten Kunststoffolie sollen verbesserte Eigenschaften, insbesondere eine verbesserte Tiefziehfähigkeit sowie verbesserte Narbstandsfestigkeit, erzielbar sein. Darüber hinaus soll sie flexibel sein und die Spezifikationsanforderungen der Automobilindustrie, z.B. hinsichtlich Alterungs- und Fogg-Eigenschaften, erfüllen. Es hat sich bei überprüfungen gezeigt, daß diese Folie bezüglich der Tiefziehfähigkeit sowie der Narbstandsfestigkeit verbesserungsbedürftig ist.

Der Erfindung lag daher die Aufgabe zugrunde, das eingangs bezeichnete Material so weiterzubilden, daß es bei der Weiterverarbeitung nach dem Tiefziehverfahren eine verbesserte Tiefziehfähigkeit und Narbstandsfestigkeit sowie gute Wärmeformbeständigkeit zeigt.

Erfindungsgemäß wird die obige Aufgabe dadurch gelöst, daß der thermoplastische Kunststoff ein mehrphasiges Polypropylen Block-Copolymerisat mit einem Ethylen-Propylen-Elastomer-Copolymerisatanteil von etwa 51 bis 85 Gew.-%, bezogen auf 100 Gew.-Teile des Polypropylen-Block-Copolymerisats, enthält, der thermoplastische Kunststoff ein thermoplastisches Elastomer darstellt, auf etwa 70 bis 30 Gew.-Teile des Polypropylen-Block-Copolymerisats etwa 30 bis 70 Gew.-Teile eines polymeren Modifizierungsmittels in Form eines Homo- und/oder Copolymerisats von Ethylen entfallen.

Der Begriff "thermoplastischer Kunststoff" soll im Rahmen der Erfindung weitestgehend verstanden werden. Darunter fanden beispielsweise thermoplastische Gemische, Polymer-Blends, Polymer-Legierungen, Pfropfcopolymerisate und dergleichen.

Kern der vorliegenden Erfindung ist demzufolge in Abweichung zu dem eingangs geschilderten Stand der Technik der Einsatz eines mehrphasigen bzw. heterophasigen Polypropylen-Block-Copolymers mit erhöhtem Ethylen-Propylen-Copolymeranteil, d.h. von mehr als 50 Gew.-%. Um die von der Erfindung angestrebten Effekte zu erzielen, muß dieser Anteil bei mindestens etwa 51, vorzugsweise etwa 55 bis 80, insbesondere etwa 60 bis 75 Gew.-% liegen. Es muß hier als überraschend angesehen werden, daß gegen die strikte Anweisung des Standes der Technik der gewichtsprozentuale Anteil des Ethylen-Propylen-Copolymers in dem angesprochenen Block-Copolymer mehr oder weniger weit über 50 Gew.-% liegt und dabei besonders günstige Eigenschaften des Kunststoffs eingestellt werden, so eine verbesserte Narbstandsfestigkeit der damit hergestellten Folie, eine verbesserte Tiefziehfähigkeit sowie Verformbarkeit.

Der den Kern der Erfindung darstellende thermoplastische Kunststoff kann mehr oder weniger vernetzt sein. In Einzelfällen ist es von Vorteil, daß eine gewisse Vernetzung eingestellt wird. Als Richtlinie könnte hier ein Vernetzungsgrad von 20 bis 80% angegeben werden, mindestens 30% insbesondere von 50 bis 75%.

Der Vernetzungsgrad läßt sich beispielsweise dadurch bestimmen, indem der thermoplastische Elastomer mit Lösungsmitteln behandelt wird, so daß das vernetzte Polymerisat als Gel zurückbleibt und aus dessen Menge Rückschlüsse auf den Vernetzungsgrad gezogen werden können. Die Bestimmung des Vernetzungsgrades kann auch nach DIN 16892 erfolgen. Die Vernetzung des thermoplastischen Kunststoffs erfolgt zweckmäßigerweise dann, wenn er bereits in Vermischung mit allen anderen Bestandteilen, einschließlich üblicher Zusatzstoffe, vorliegt. Dies kann beispielsweise in einem üblichen Mischaggregat, wie mit Innenmischern, Schnecken-Extrudern und dgl. unter geeigneten Temperatur-, Scher-, Misch- und Druckbedingungen erfolgen.

Im Rahmen der Erfindung ist es erforderlich, zur Einstellung der wünschenswerten Effekte, ein teilkristallines und/oder amorphes polymeres Modifizierungsmittel heranzuziehen. Das Modifizierungsmittel dient zur Einregelung der Schmelzfestigkeit und -viskosität, Zähigkeit, Kalandrierbarkeit, Extrudierbarkeit und ähnlicher Eigenschaften. Auch kann es die Kristallisationsneigung der Folien bzw. der Fertigteile erschweren oder verhindern, was die Tiefzieheigenschaften und die Narbstandsfestigkeit positiv beeinflußt. Die Modifikatoren können auch die Mischbarkeit und Verträglichkeit der einzelnen Mischungskomponenten positiv beeinflussen bzw. auch die Benetzbarkeit und Verklebbarkeit verbessern. In einigen Fällen können sie die innere oder äußere Weichmachung oder Steifmachung der Matrixpolymeren verursachen bzw. in der gewünschten Weise beeinflussen. Je nach Zielsetzung ist es dem Fachmann ohne weiteres möglich, unter den nachfolgen detailliert beschriebenen Modifizierungsmitteln das jeweils geeignete auszusuchen.

Erfindungsgemäß wird als polymeres Modifizierungsmittel ein Homo- und/oder Copolymer von Ethylen eingesetzt. Hier ist ein Homopolymerisat des Propylens im Hinblick auf die Rahmenbedingungen zum Polypropylen-Block-Copolymerisat nicht in Betracht zu ziehen. Wird ein Ethylen-Propylen-Copolymer eingesetzt, dann enthält dieses vorzugsweise etwa 5 bis 20 Gew.-% Ethylen. Dabei ist es insbesondere bevorzugt, wenn das Ethylen-Propylen-Copolymer eine enge Molmasse-Verteilung mit einer Uneinheitlichkeit U von weniger als 6, insbesondere weniger als etwa 4, aufweist. Mit besonderem Vorteil wird auch ein Ethylen-Copolymer eingesetzt, daß etwa 5 bis 20 Gew.-% Okten und/oder Buten als Comonomer enthält. Vorteilhaft ist es auch, wenn das Homo- und/oder Copolymer des Ethylens oder Propylens beim Kalandrieren einen Schmelzindex MFI (230/2,16) von etwa 0,5 bis 10 g/10 min, insbesondere etwa 0,8 bis 2,5 g/10 min und beim Extrudieren einen Schmelzindex von mindestens etwa 0,8 g/10 min, insbesondere etwa 2,5 bis 25 g/10 min, aufweist.

Weitere erfindungsgemäß einsetzbare bevorzugte polymere Modifizierungsmittel sind: ein Ethylen-Propylen-Copolymer, Ethylen-Propylen-Dien-Terpolymer, ein Ethylen-Acrylsäure-Copolymer, ein Ethylen-Acrylsäureester-Copolymer, ein niedrigdichtes Polyethylen, ein Ethylen-Vinylacetat-Copolymer, ein Ethylenglycidylmethacrylat-Copolymerisat, ein Styrol-Ethylen-Propylen-Block-Copolymer (SEP), ein Styrol-Ethylen-Butadien-Styrol-Block-Copolymer (SEBS (hydriert)), ein Styrol-Ethylen-Butadien-Block-Copolymer (SEB), ein Acrylnitril-Ethylen-Propylen-Dien-Styrol-Copolymer (A-EPDM-S) und/oder ein hochmolekularer amorpher EPM-Kautschuk.

Ein besonders geeignetes Modifizierungsmittel im Rahmen der Erfindung ist ein teilkristallines statistisches Ethylen-Propylen-Dien-Terpolymer (EPDM), demzufolge kein Block-Terpolymer. Dieses ermöglicht es, daß die Fertigmischung einer Vernetzung über die Dien-Componente anhand üblicher Vernetzungsmittel, wie beispielsweise mit Peroxid, Epoxid- und Silanverbindungen und dgl., unterzogen werden kann. Der Dien-Anteil in diesem Terpolymer kann insbesondere ein Dicyclopentadien, 1,4-Hexadien und/oder 5-Ethyliden-2-Norbornen sein. Der gewichtsprozentuale Summenanteil des Ethylens und Propylens im statistischen Terpolymer beträgt vorzugsweise etwa 52 bis 91 Gew.-%, wobei vorzugsweise insbesondere der Mindestgehalt an Ethylen etwa 65 Gew.-% beträgt.

In der Mehrzahl der praktischen Anwendungsfälle enthält der thermoplastische Kunststoff, anhand dessen erfindungsgemäß Folien und Formkörper hergestellt werden können, vorzugsweise Füllstoffe. Der Füllstoffanteil beträgt vorzugsweise etwa 8 bis 28 Gew.-%. Es können alle üblichen Füllstoffe herangezogen werden, insbesondere von Kaliumaluminiumsilicat, Talkum, Kreide, Kaolin, Metalloxiden, insbesondere Titandioxid, und/oder Ruß. Schließlich können weiter übliche Zusatzstoffe herangezogen werden, insbesondere Stabilisatoren, wie Oxidationsverzögerer und Wärmestabilisatoren, z.B. sterisch gehinderte Phenole, Hydrochinone, substituierte Vertreter dieser Gruppe, Phosphite, Phosphonite und/oder Mischungen derselben, UV-Stabilisatoren, z.B. verschiedene niedermolekulare, hochmolekulare, substituierte Resorcine, Salicylate, Benzotriazole und Benzophenone und/oder Mischungen derselben und dgl., Gleitmittel, wie C₁₂- bis C₂₆- Fettsäuren, Fettalkohole, Fettsäureester und - amide und/oder Mischungen derselben und dgl., Farbmittel, wie organische Farbstoffe und Pigmente, z.B. Titandioxid, Phthalocyanine, oder Ruß, Flammschutzmittel, wie Ammoniumpolyphosphat, Zinkborat, Magnesium, Hydroxid und Aluminiumhydroxid und dgl.

Die Eigenschaften des in dem thermoplastischen Kunststoff enthaltenen Polypropylen-Block-Copolymerisats (Abkürzung: PP) werden durch das funktionelle Zusammenwirken des darin enthaltenen Polypropylens sowie des damit copolymerisierten polymeren Modifikationsmittels, wie insbesondere Ethylen-Propylen-Copolymerisats, bestimmt. Letzteres stellt die Kautschuk-Komponente dar (Abkürzung: EPM oder EPR). Der PP-Anteil läßt sich auch als "harte" Komponente ansehen, während der EPM-Anteil als "weiche" Komponente zu werten ist. Hieraus ergibt es sich, daß die elastischen und auch die thermoplastischen Eigenschaften der fertigen Kunststoffmischung durch das Verhältnis PP/EPM wesentlich beeinflußt werden. Weitere Einflußmöglichkeiten sind durch die Einverleibung der erörterten Modifizierungsmittel gegeben.

Der thermoplastische Kunststoff, anhand dessen die erfindungsgemäße Folie bzw. der erfindungsgemäße Formkörper hergestellt werden, zeichnet sich durch die wünschenswerte Witterungsbeständigkeit aus. Wird die erfindungsgemäße Folie mit diesem Material hergestellt, dann zeigt diese eine vorzügliche Narbstandsfestigkeit, gute Schmelzfestigkeit sowie ein besonders gutes Tiefziehvermögen. Dieses zeigt sich bei den verschiedenen Tiefziehverfahren, so bei dem Luftpresseverfahren, dem Membranpresseverfahren und dgl.. Tiefgezogene Formteile bzw. Verbundgebilde aus der erfindungsgemäßen Folie können beispielsweise mit besonderem Vorteil für Flugzeuge und Kraftfahrzeuge, Kraftfahrzeuginnenverkleidungen oder -verkleidungsteile, vorzugsweise Schalttafeln oder Armaturenbrettern, Säulen, Kraftfahrzeugseitenverkleidungen, -türverkleidungen, -ablagen und -außenverkleidungen verwendet werden. Auch kann die erfindungsgemäße Folie mit üblichen Techniken auf die verschiedensten flachen bzw. dreidimensionalen Substrate, unverformt oder verformt aufgeklebt werden. Sie kann mit weiteren Schichten, wie Schutzschichten, versehen werden. Schließlich können auch Haftschichten auf der Rückseite angebracht werden, gegebenenfalls auch mit geeigneten Schaumschichten kaschiert oder verbunden werden.

Die Erfindung soll anhand der nachfolgenden Beispiele noch näher erläutert werden:

### Beispiele 1 bis 5

Anhand der sich aus der nachfolgenden Tabelle ergebenden Rezepturen wurde mittels eines 4-Walzenkalanders eine Grundfolie einer Stärke von 1,1 mm hergestellt. Diese Folie wurde bezüglich verschiedener Eigenschaften gemessen, die von der nachfolgenden Tabelle ebenfalls erfaßt werden.

### Rohstoffe der Beispiele 1 bis 5:

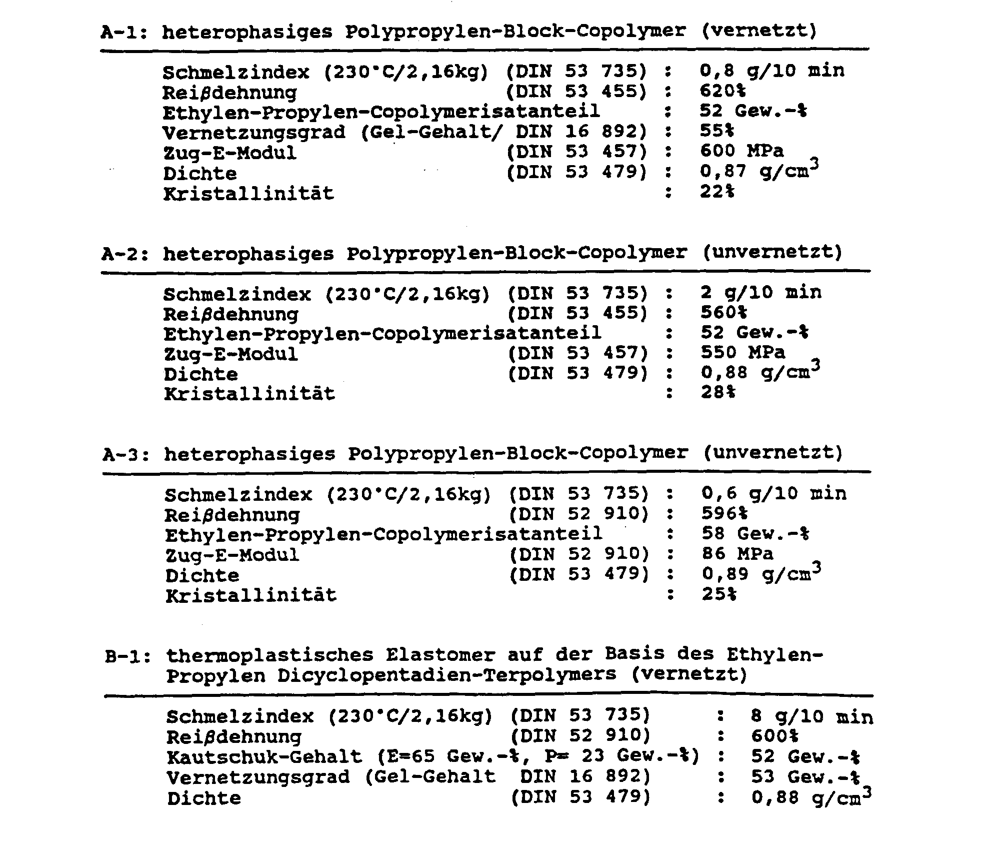

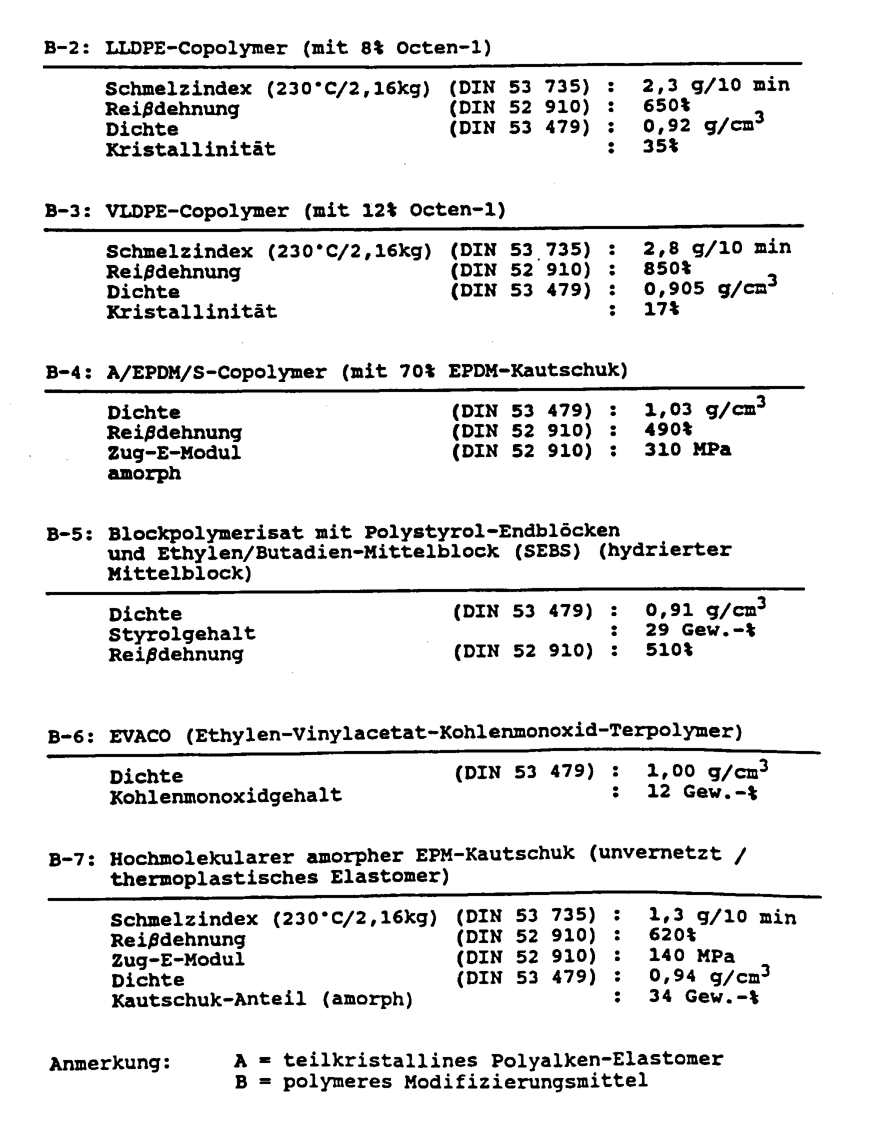

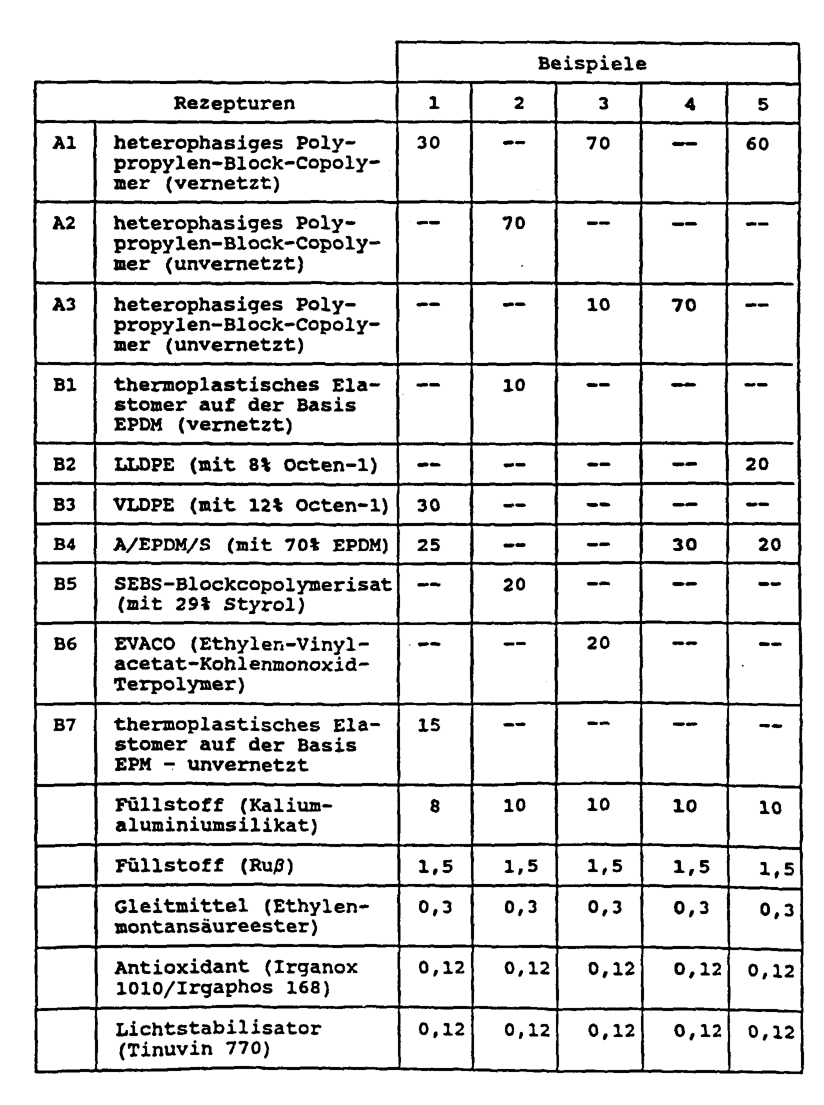

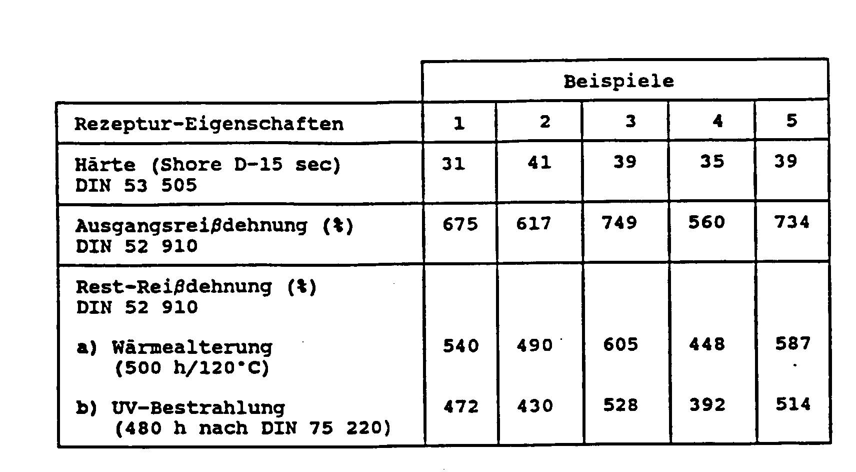

## Patentansprüche

1. Folie oder Formkörper aus einem thermoplastischen Kunststoff auf der Basis mindestens eines teilkristallinen Polyalken-Elastomeren und/oder -Elastomergemisches bestehend aus einem mehrphasigen Alken-Block-Copolymerisat mit einem bestimmten heterophasigen Elastomer-Copolymerisat-Anteil, eines Homo- und/oder Copolymers eines Alkens und eines polymeren Modifizierungsmittels, wobei der Kunststoff gegebenenfalls Stabilisatoren, Füllstoffe, Gleitmittel, Farbmittel sowie andere übliche Zusatzstoffe enthält, dadurch **gekennzeichnet,** daß der thermoplastische Kunststoff ein mehrphasiges Polypropylen- Block-Copolymerisat mit einem Ethylen-Propylen-Copolymerisatanteil von 51 bis 85 Gew.-%, bezogen auf 100 Gew.-Teile des Polypropylen-Block-Copolymerisats, enthält, der thermoplastische Kunststoff ein thermoplastisches Elastomer darstellt und auf 70 bis 30 Gew.-Teile des Polypropylen-Block-Copolymerisats 30 bis 70 Gew.-Teile eines polymeren Modifizierungsmittels in Form eines Homo- und/oder Copolymerisats von Ethylen entfallen.

2. Folie oder Formkörper nach Anspruch 1, dadurch gekennzeichnet, daß der Anteil des Ethylen-Propylen-Copolymerisats in dem Polypropylen-Block-Copolymerisat 55 bis 80 Gew.% beträgt.

3. Folie oder Formkörper nach Anspruch 2, dadurch gekennzeichnet, daß das Polypropylen-Block-Copolymerisat zu mindestens 30% vernetzt ist.

4. Folie oder Formkörper nach Anspruch 3, dadurch gekennzeichnet, daß das Polypropylen-Block-Copolymerisat zu mindestens 50 bis 75% vernetzt ist.

5. Folie oder Formkörper nach mindestens einem der vorhergehenden Ansprüche, dadurch gekennzeichnet, daß das polymere Modifizierungsmittel ein Ethylen-Propylen-Copolymer, Ethylen-Propylen-Dien-Terpolymer, ein Ethylen-Acrylsäure-Copolymer, ein Ethylen-Acrylsäureester-Copolymer, ein niedrigdichtes Polyethylen, ein Ethylen-Vinylacetat-Copolymer, ein Ethylenglycidylmethacrylat-Copolymerisat, ein Styrol-Ethylen-Propylen-Block-Copolymer (SEP), ein Styrol-Ethylen-Butadien-Styrol-Block-Copolymer (SEBS (hydriert)), ein Styrol-Ethylen-Butadien-Block-Copolymer (SEB), ein Acrylnitril-Ethylen-Propylen-Dien-Styrol-Copolymer (A-EPDM-S) und/oder ein hochmolekularer amorpher EPM-Kautschuk ist.

6. Folie oder Formkörper nach mindestens einem der vorhergehenden Ansprüche, dadurch gekennzeichnet, daß der thermoplastische Kunststoff als polymeres Modifizierungsmittel ein statistisches Ethylen-Propylen-Dien-Terpolymer enthält.

7. Folie oder Formkörper nach Anspruch 6, dadurch gekennzeichnet, daß der gewichtsprozentuale Summenanteil des Ethylens und Propylens im statistischen Terpolymer 52 bis 91 Gew.-% beträgt.

8. Folie oder Formkörper nach Anspruch 7, dadurch gekennzeichnet, daß das statistische Terpolymer mindestens 65 Gew.-% Ethylen enthält.

9. Folie oder Formkörper nach mindestens einem der vorhergehenden Ansprüche, dadurch gekennzeichnet, daß der thermoplastische Kunststoff Füllstoffe enthält.

10. Folie oder Formkörper nach Anspruch 9, dadurch gekennzeichnet, daß der thermoplastische Kunststoff fltW 8 bis 28 Gew.-% Füllstoffe enthält.

11. Folie oder Formkörper nach mindestens einem der vorhergehenden Ansprüche, dadurch gekennzeichnet, daß die Füllstoffe in Form von Kaliumaluminiumsilikat, Talkum, Kreide, Kaolin, Metalloxiden, insbesondere Titandioxid, und/oder Ruß vorliegen.

12. Tiefgezogene Formteile aus einer Folie gemäß mindestens einem der vorhergehenden Ansprüche 1 bis 11 und damit hergestellte Verbundgebilde, insbesondere für Flugzeuge und Kraftfahrzeuge, Kraftfahrzeuginnenverkleidungen oder -verkleidungsteile, vorzugsweise Schalttafeln oder Armaturenbrettern, Säulen, Kraftfahrzeugseitenverkleidungen, -türverkleidungen, -ablagen und -außenverkleidungen.

## Claims

1. A foil or moulded part of a thermoplastics material based on at least one partially-crystalline polyalkene elastomer and/orelastomeric mixture comprising a multiphase alkene block copolymer with a specific heterophasic elastomeric copolymer concentration, a homopolymer and/or copolymer of an alkene and a polymeric modifying agent, whereby the plastics material may additionally contain stabilisers, fillers, lubricants, colouring agents and other usual additives, **characterised in that** the thermoplastics material is a multiphase polypropylene block copolymer with an ethylene-propylene copolymer content of 51 to 85 per cent by weight relative to 100 parts by weight of polypropylene block copolymer, the thermoplastics material is a thermoplastic elastomer and there are 30 to 70 parts by weight of a polymeric modifying agent, in the form of an ethylene homopolymer and/or copolymer, to 70 to 30 parts by weight of polypropylene block copolymer.

2. A foil or moulded part according to claim 1, characterised in that the concentration of ethylene-propylene copolymer in the polypropylene block copolymer is 55 to 80 per cent by weight.

3. A foil or moulded part according to claim 2, characterised in that the polypropylene block copolymer is at least 30% cross-linked.

4. A foil or moulded part according to claim 3, characterised in that the polypropylene block copolymer is at least 50 to 75 per cent cross-linked.

5. A foil or moulded part according to at least one of the preceding claims, characterised in that the polymeric modifying agent is an ethylene-propylene copolymer, an ethylene-propylene-diene-terpolymer, an ethylene-acrylic acid copolymer, an ethylene-acrylic acid ester copolymer, a low-density polyethylene, an ethylene-vinyl acetate copolymer, an ethyleneglycidyl methacrylate copolymer, a styrene-ethylene-propylene block copolymer (SEP), a styrene-ethylene-butadiene-styrene block copolymer (SEBS (hydrated)), a styrene-ethylene-butadieneblockcopolymer (SEB), an acrylnitrile-ethylene-propylene-diene-styrene copolymer (A-EPDM-S) and/or a high molecular weight amorphous EPM rubber.

6. A foil or moulded part according to at least one of the preceding claims, characterised in that the thermoplastics material contains a random ethylene-propylene-diene terpolymer as a polymeric modifying agent.

7. A foil or moulded part according to claim 6, characterised in that the total percentage by weight of ethylene and propylene in the random terpolymer is between 52 and 91 per cent by weight.

8. A foil or moulded part according to claim 7, characterised in that the random terpolymer contains at least 65 per cent by weight ethylene.

9. A foil or moulded part according to at least one of the preceding claims, characterised in that the thermoplastics material contains fillers.

10. A foil or moulded part according to claim 9, characterised in that the thermoplastics material contains 8 to 28 per cent by weight filler.

11. A foil or moulded part according to at least one of the preceding claims, characterised in that the filler is potassium aluminium silicate, talcum, chalk, kaolin, a metal oxide, especially titanium dioxide and/or carbon black.

12. Thermoformed moulded parts from a foil according to at least one of the preceding claims 1 to 11 and a composite structure manufactured therewith, especially for aircraft and motor vehicles, interior linings of motor vehicles or parts thereof, preferably panels or instrument panels, columns, motor vehicle side panels, door panels, shelf trays and external panels.

## Revendications

1. Feuille ou pièce moulée en une matière synthétique thermoplastique à base d'au moins un élastomère et/ou d'un mélange de polyalcènes élastomères partiellement cristallins constitué d'un copolymère à séquence d'alcènes à plusieurs phases comprenant une fraction déterminée de copolymère-élastomère à phases mixtes, d'un homopolymère et/ou copolymère d'un alcène et d'un agent polymérique de modification, la matière synthétique contenant éventuellement des agents stabilisants, des charges, des lubrifiants, des matières colorantes ainsi que d'autres additifs classiques, caractérisée en ce que la matière synthétique thermoplastique contient un copolymère séquencé polypropylénique à plusieurs phases contenant une proportion de copolymère éthylène-propylène de 51 à 85 % en poids, pour 100 parties en poids du copolymère séquencé polypropylénique, la matière synthétique thermoplastique constitue un élastomère thermoplastique et il y a 30 à 70 parties en poids d'un agent polymérique modificateur sous forme d'un homopolymère et/ou d'un copolymère d'éthylène pour 70 à 30 parties en poids du copolymère séquencé polypropylénique.

2. Feuille ou pièce moulée suivant la revendication 1, caractérisée en ce que la proportion de copolymère éthylène-propylène dans le copolymère séquencé polypropylénique s'élève à 55-80 % en poids.

3. Feuille ou pièce moulée suivant la revendication 2, caractérisée en ce que le copolymère séquencé polypropylénique est réticulé à 30 % au moins.

4. Feuille ou pièce moulée suivant la revendication 3, caractérisée en ce que le copolymère séquencé polypropylénique est réticulé en proportion d'au moins 50 à 75 %.

5. Feuille ou pièce moulée suivant l'une au moins des revendications précédentes, caractérisée en ce que l'agent polymérique modificateur est un copolymère éthylène-propylène, un terpolymère éthylène-propylène-diène, un copolymère éthylène-acide acrylique, un copolymère éthylène-ester d'acide acrylique, un polyéthylène basse densité, un copolymère éthylène-acétate de vinyle, un copolymère éthylène-méthacrylate de glycidyle, un copolymère séquencé styrène-éthylène-propylène (SEP), un copolymère séquencé styrène-éthylène-butadiène-styrène (SEBS (hydrogéné)), un copolymère séquencé styrène-éthylène-butadiène (SEB), un copolymère acrylonitrile-éthylène-propylène-diène-styrène (A-EPDM-S) et/ou un caoutchouc EPM amorphe de haut poids moléculaire.

6. Feuille ou pièce moulée suivant l'une au moins des revendications précédentes, caractérisée en ce que la matière synthétique thermoplastique contient comme agent polymérique modificateur un terpolymère éthylène-propylènediène statistique.

7. Feuille ou pièce moulée suivant la revendication 6, caractérisée en ce que la proportion totale en % en poids d'éthylène et de propylène dans le terpolymère statistique s'élève à une valeur de 52 à 91 % en poids.

8. Feuille ou pièce moulée suivant la revendication 7, caractérisée en ce que le terpolymère statistique contient au moins 65 % en poids d'éthylène.

9. Feuille ou pièce moulée suivant l'une au moins des revendications précédentes, caractérisée en ce que la matière synthétique thermoplastique contient des charges.

10. Feuille ou pièce moulée suivant la revendication 9, caractérisée en ce que la matière synthétique thermoplastique contient 8 à 28 % en poids de charges.

11. Feuille ou pièce moulée suivant l'une au moins des revendications précédentes, caractérisée en ce que les charges se présentent sous forme de silicate de potassium et aluminium, de talc, de craie, de kaolin, d'oxydes métalliques, notamment de dioxyde de titane, et/ou de noir de fumée.

12. Pièces façonnées par emboutissage profond à partir d'une feuille suivant au moins l'une des revendications 1 à 11 précédentes et corps composites fabriqués à partir de ces pièces, notamment pour aéronefs et véhicules automobiles, revêtements intérieurs ou parties de revêtements intérieurs de véhicules automobiles, de préférence tableaux de commande ou tableaux de bord, montants, revêtements latéraux, revêtements de portes, boîtes à gants et revêtements extérieurs de véhicules automobiles.
